# EUROPÄISCHE PATENTSCHRIFT

(11) **EP 0 984 081 B1**
(45) Veröffentlichungstag und Bekanntmachung des Hinweises auf die Patenterteilung: **02.04.2003**
(21) Anmeldenummer: 98810875.9
(22) Anmeldetag: 03.09.1998
(51) Int. Cl.: C25B 9/04, C25B 9/00, H01M 8/02

(54) **Bipolarplatte und Elektrolyseur mit einer Bipolarplatte**
Bipolar plate and electrolyzer with bipolar plate
Plaque bipolaire et électrolyseur avec plaque bipolaire

(43) Veröffentlichungstag der Anmeldung: 08.03.2000
(73) Patentinhaber: Enoxa AG, 4532 Feldbrunnen (CH)
(72) Erfinder: Staub, Max, Dipl. El. Ing. HTL, 3375 Inkwil (CH); Eggenschwiler, Viktor, Dipl. El. Ing. ETH/SIA, 4232 Fehren (CH)
(74) Vertreter: Roshardt, Werner Alfred, Dipl.-Phys.

(56) Entgegenhaltungen:
- EP-A- 0 007 078
- US-A- 5 643 690

## Beschreibung

### Technisches Gebiet

Die vorliegende Erfindung betrifft eine Bipolarplatte, die insbesondere für die Verwendung in einem Elektrolyseur geeignet ist, sowie einen Elektrolyseur mit einer solchen Bipolarplatte.

### Stand der Technik

Für die Speicherung und Wiedergewinnung von elektrischer Energie werden seit einigen Jahren vermehrt Speicher- und Wiedergewinnungssysteme verwendet, welche auf dem Prinzip der Elektrolyse beruhen. Solche Systeme werden insbesondere auch zur Speicherung von Energie aus regenerativen Energiequellen (z.B. Sonne, Wasser oder Wind) eingesetzt, da deren tageszeitlicher Produktionsverlauf meistens nicht mit dem tageszeitlichen Verlauf des Energiebedarfs übereinstimmt und deshalb Vorrichtungen zur Energiespeicherung erforderlich sind.

Ein auf dem Prinzip der Elektrolyse beruhendes Speicher- und Wiedergewinnungssystem für Energie umfasst üblicherweise einen Elektrolyseur, eine Gasspeichervorrichtung und eine Brennstoffzelle. Mit dem z.B. in einem Solarkraftwerk erzeugten Strom wird in einem Elektrolyseur typischerweise Wasser elektrolytisch in Wasserstoffgas und Sauerstoffgas zerlegt. Die bei der Elektrolyse erzeugten beiden Gase werden sodann in einer geeigneten Gasspeichervorrichtung gespeichert. Bei Bedarf können in einer Brennstoffzelle die Gase Wasserstoff und Sauerstoff in einer Reaktion, welche im wesentlichen die Umkehrreaktion zur Elektrolyse darstellt und als kalte oder katalytische Verbrennung bezeichnet wird, auf elektrochemischem und damit direktem Weg wiederum in elektrische Energie umgewandelt werden, wobei als Reaktionsprodukt Wasser entsteht.

Während früher sowohl für die Elektrolyse in Elektrolyseuren als auch für die kalte Verbrennung in Brennstoffzellen alkalische Elektrolyte in flüssiger Form als Ionen-Leiter verwendet wurden, werden in neuerer Zeit Eletrolyseure und Brennstoffzellen eingesetzt, bei denen der flüssige Elektrolyt durch eine feste Elektrolytmembran (auch als lonenaustauschmembran bezeichnet) ersetzt ist. Diese Membran wird im folgenden als Festelektrolyt bezeichnet. Elektrolyseure und Brennstoffzellen mit Festelektrolyten weisen insbesondere bei Vorrichtungen mit kleiner Leistung (im Bereich von einigen wenigen kW) Vorteile gegenüber entsprechenden Vorrichtungen mit flüssigem Elektrolyt auf.

Gemäss der WO-A-96 18217 (Fraunhofer-Gesellschaft) ist eine Brennstoffzelle bekannt, bei der in Stapelbauweise mehrere elektrochemische Zellen in Serie zu einem Brennstoffzellenstapel aneinandergereiht sind. Jede elektrochemische Zelle besteht vereinfachend aus einer Anode, einer Kathode und einem dazwischenliegenden Festelektrolyten und bildet somit eine Membran-Elektroden-Einheit. Die einzelnen Membran-Elektroden-Einheiten im Stapel werden je durch eine Bipolarplatte aus elektrisch leitendem Material getrennt. Die eine Seite (Anodenseite) der Bipolarplatte kontaktiert die Anode einer ersten Membran-Elektroden-Einheit, während die andere Seite (Kathodenseite) der Bipolarplatte die Kathode der nächsten Membran-Elektroden-Einheit im Brennstoffzellenstapel kontaktiert. In den Oberflächen der Bipolarplatten sind Kanäle ausgebildet, die bei den Bipolarplatten in der Brennstoffzelle der Zuführung der Gase sowie der Abführung des bei der kalten Verbrennung entstehenden Wassers dienen. Durch die Kanäle werden die Gase zu den Elektroden geleitet, wo sie katalytisch aufgespaltet werden und durch die Festelektrolyt-Membran hindurch miteinander reagieren. Die beiden äussersten Membran-Elektroden-Einheiten bzw. elektrochemischen Zellen des Stapels werden je durch eine Endplatte abgeschlossen. In den stapelseitigen Oberflächen der Endplatten sind ebenfalls Zuund Abführkanäle für die Gase und das Wasser ausgebildet.

In der Patentschrift US 4 590 134 (Occidental Chemical Corporation) ist eine weitere Bipolarplatte für eine Brennstoffzelle beschrieben. Zur Ausbildung der Zuführ- und Abführkanäle auf beiden Seite der Platte ist diese wellenförmig, nach Art eines Wellbleches, strukturiert. Dadurch werden sowohl auf der Anodenseite als auch auf der Kathodenseite der Platte parallel verlaufende Rippen und Kanäle gebildet.

In der Publikation "R&D OF HIGH PERFORMENCE SOLID POLYMER ELEKTROLYTE WATER ELEKTROLYZER IN WE-NET" (M. Yamaguchi, K. Yagiuchi, K. Okisawa, Proceedings of 11^{th} World Hydrogen Energy Conference WHEC, Stuttgart, Germany, published by "DECHEMA, Deutsche Gesellschaft für Chemisches Apparatewesen, Chemische Technik und Biotechnologie e.V." on behalf of "International Association for Hydrogen Energy") wird eine Membran-Elektroden-Einheiten bzw. eine elektrochemische Zelle beschrieben, die zur Herstellung in Stapelbauweise eines Elektrolyseurs zur Erzeugung von Wasserstoff und Sauerstoff geeignet ist. Die elektrochemische Zelle umfasst eine Festelektrolyt-Membran, die auf beiden Seiten mit elektrisch leitfähigen Katalysatorschichten beschichtet ist, welche gleichzeitig als Elektroden (die eine Seite als Kathode, die andere Seite als Anode) dienen. Die einzelnen Membran-Elektroden-Einheiten bzw. elektrochemischen Zellen können in einem Stapel angeordnet und je durch eine Bipolarplatte (beispielsweise aus Titan) getrennt werden. Im Zellenstapel eines Elektrolyseurs kontaktiert die Anodenseite einer Bipolarplatte die Anode einer ersten Membran-Elektroden-Einheit, während die Kathodenseite der Bipolarplatte die Kathode der nächsten Membran-Elektroden-Einheit im Elektrolyseurstapel kontaktiert. In den Oberflächen der Bipolarplatten sind wiederum Kanäle ausgebildet. Diese dienen bei den Bipolarplatten im Elektrolyseur der Zuführung von Wasser sowie dem Sammeln und Abführen der durch die Elektrolyse an den Elektroden erzeugten Gase Sauerstoff und Wasserstoff sowie des nicht verbrauchten Restwassers. Ähnlich wie bei der oben erwähnten Brennstoffzelle werden die beiden äussersten Membran-Elektroden-Einheiten bzw. elektrochemischen Zellen des Stapels im Elektrolyseur wiederum je durch eine Endplatte abgeschlossen, in deren stapelseitigen Oberflächen Zu- und Abführkanäle für das Wasser und die erzeugten Gase Wasserstoff und Sauerstoff ausgebildet sind.

Ein Problem bei gestapelten Bipolarplatten der oben genannten Art besteht sowohl bei Brennstoffzellen als auch bei Elektrolyseuren darin, dass einerseits der elektrische Widerstand für den Stromfluss durch den Stapel hindurch (d.h. im wesentlich senkrecht zu den Bipolarplatten) möglichst klein sein sollte, damit möglichst wenig Verlustwärme aufgrund des ohmschen Widerstandes entsteht. Das bedeutet, dass hinsichtlich des elektrischen Widerstandes durch den aus den Bipolarplatten und den Membran-Elektroden-Einheiten gebildeten Stapel hindurch die in den Oberflächen der Bipolarplatten ausgebildeten Kanäle einen möglichst kleinen Querschnitt aufweisen sollten, um die Querschnittfläche des Stromleiters, nicht unnötig zu verkleinern.

Andrerseits ist jedoch ein grosser Kanalquerschnitt wünschenswert, damit der für die Zuführung und Abführung von Wasser und Gasen erforderliche Druck in den Kanälen nicht zu gross wird. Die Kanäle sollen für das im wesentlichen parallel zu den Ebenen der Bipolarplatten durch den aus den Bipolarplatten und den Membran-Elektroden-Einheiten gebildeten Zellenstapel durchströmende Fluid einen möglichst kleinen Strömungswiderstand aufweisen. Ein zu grosser Druck in den Kanälen, welche an die auf den Festelektrölyt-Membranen aufgebrachten Elektroden angrenzen, verursacht Probleme beim Abdichten der Zellen und kann zudem eine Beschädigung der mechanisch empfindlichen Membranen zur Folge haben.

### Darstellung der Erfindung

Aufgabe der vorliegenden Erfindung ist die Bereitstellung einer mit Kanälen zum Leiten von Flüssigkeiten und/oder Gasen in den Plattenoberflächen versehenen Bipolarplatte für einen Elektrolyseur oder eine Brennstoffzelle in Stapelbauweise, wobei die Kanalquerschnitte eine ausreichende Fluidströmung durch die Kanäle hindurch ermöglichen, ohne dass der elektrische Widerstand für einen Stromfluss senkrecht zu den Plattenoberflächen durch den Stapel hindurch wesentlich vergrössert wird, sowie die Bereitstellung eines mit einer solchen Bipolarplatte versehenen Elektrolyseurs.

Die Lösung der Aufgabe ist Gegenstand der unabhängigen Patentansprüche.

Gemäss der Erfindung weist eine Bipolarplatte zur Verwendung in einem Elektrolyseur oder in einer Brennstoffzelle eine Anodenseite und eine Kathodenseite auf. In wenigstens einer der beiden Plattenoberflächen an der Anodenseite und der Kathodenseite sind Fluidleitungskanäle ausgebildet, welche zum Leiten einer Flüssigkeits- und/oder Gasströmung dienen. Die erfindungsgemässe Bipolarplatte zeichnet sich dadurch aus, dass die Kanäle wenigstens einen Abschnitt (entlang der Länge des Kanals) aufweisen, in welchem die Kanäle in einem Bereich (d.h. in einem Tiefenbereich zwischen dem Kanalrand an der Plattenoberfläche und der Kanalsohle) im Innern der Bipolarplatte eine grössere Breite aufweisen als die Kanalbreite beim Kanalrand an der Oberfläche der Bipolarplatte.

Durch die Erfindung wird eine Bipolarplatte geschaffen, die Fluidleitungskanäle mit ausreichend grossen Kanalquerschnitten aufweist, ohne dass der elektrische Widerstand für einen Stromfluss senkrecht zu den Plattenoberflächen durch einen aus den Bipolarplatten und Membran-Elektroden-Einheiten gebildeten Stapel hindurch aufgrund der Kanäle wesentlich vergrössert wird. Insbesondere wird dieser Widerstand an den Kontaktflächen zwischen den Bipolarplatten und den angrenzenden Elektroden bzw. Membranen nur unwesentlichen vergrössert, weil die Kanalöffnungen zwischen den Kanalrändem in den Kontaktflächen der Bipolarplatten vergleichsweise schmal sind.

Durch die schmalen, an die Elektroden bzw. Membranen angrenzenden Kanalöffnungen und die daraus resultierende grosse Oberfläche der Kontaktflächen wird weiter gewährleistet, dass die Gefahr einer Beschädigung der an die Bipolarplatten angrenzenden Membranen aufgrund des Druckes des Fluids in den Kanälen gering bleibt, weil die Membranen durch die grosse Oberfläche der Kontaktflächen der Bipolarplatten optimal gestützt werden.

Gemäss einer bevorzugten Variante der Erfindung wird eine erfindungsgemässe Bipolarplatte zur elektrolytischen Erzeugung von Wasserstoffgas und Sauerstoffgas aus Wasser in einem Elektrolyseur verwendet. Bipolarplatten gemäss anderen bevorzugten Ausführungsarten der Erfindung können jedoch auch zur Verwendung in anderen Elektrolyseurtypen und/oder Brennstoffzellen ausgebildet sein, wobei anstelle der Reaktionspartner Sauerstoff und Wasserstoff grundsätzlich auch andere Reaktionspartner für die Elektrolyse bzw. die kalte Verbrennung verwendet werden können, so z.B. Sauerstoff und Methanol, Sauerstoff und Kohlenmonoxid oder Sauerstoff und Erdgas.

Die relativ grossen Kanalquerschnitte der erfindungsgemässen Bipolarplatte weisen im Falle der Verwendung der Bipolarplatten für einen Elektrolyseur einen weiteren Vorteil auf: durch die grossen Kanalquerschnitte wird die Verweilzeit des durch die Kanäle in den Bipolarplatten hindurch geführten Wassers in den Kanälen vergrössert, wodurch eine Vergrösserung der Ausbeute der Elektrolyse erreicht wird.

Gemäss einer bevorzugten Ausführungsart der Erfindung weist der Kanal in einem Bereich unterhalb des oberen Kanalrandes, im Innern der Bipolarplatte, wenigstens die anderthalbfache Breite der Kanalbreite beim Kanalrand an der Oberfläche der Bipolarplatte auf. Vorzugsweise weist der Kanal in einem Bereich unterhalb des oberen Kanalrandes, im Innern der Bipolarplatte, sogar mindestens die zweifache Breite der Kanalbreite beim Kanalrand an der Oberfläche der Bipolarplatte auf.

Eine bevorzugte Variante der erfindungsgemässen Bipolarplatte zeichnet sich durch eine Ausbildung des Kanals derart aus, dass er einen im wesentlichen trapezförmigen Kanalquerschnitt aufweist. Die kurze parallele Trapezseite wird durch die in der Oberfläche der Bipolarplatte ausgebildete Kanalöffnung definiert, die nach der Anordnung der Bipolarplatte in einem aus Bipolarplatten und Membran-Elektroden-Einheiten gebildeten Stapel an die anliegende Elektrode bzw. den anliegenden Festelekrolyten grenzt. Die lange parallele Trapezseite wird durch die Kanalsohle im Innern der Bipolarplatte und die beiden nicht parallelen Trapezseiten werden durch die Kanalseitenwände definiert.

Gemäss einer bevorzugten Ausführungsart der Erfindung sind in der den Kanal aufweisenden Plattenoberfläche einer Bipolarplatte zwei oder mehrere ringförmige Fluidleitungskanäle ausgebildet und nach Art von konzentrischen Kreisen angeordnet, die durch wenigstens einen radial verlaufenden Sammelkanal fluidleitend verbunden sind. Es sind jedoch andere Anordnungen der Kanäle in den Oberflächen von Bipolarplatten gemäss der Erfindung möglich. So können die Kanäle beispielsweise auch in Form von konzentrischen Quadraten oder Rechtecken angeordnet und durch radial verlaufende Sammelkanäle fluidleitend miteinander verbunden sein, oder es kann ein einziger, labyrintartig auf der Plattenoberfläche verlaufender Kanal vorgesehen sein. Die Kanäle sind derart angeordnet und ausgebildet, dass eine möglichst gleichmässige Verteilung des Wassers auf den Oberflächen der Bipolarplatten (und somit den Oberflächen der Elektroden und der daran anschliessenden Festelektrolyt-Membran) erreicht wird.

Vorzugsweise weist eine Bipolarplatte gemäss der Erfindung eine im wesentlichen ebene Form auf und vorzugsweise sind in beiden zur Plattenebene im wesentlichen parallelen Plattenoberflächen an der Anodenseite und der Kathodenseite Fluidleitungskanäle ausgebildet. Dabei ist vorzugsweise wenigstens ein Kanal an der Anodenseite gegenüber einem weiteren Kanal an der Kathodenseite versetzt angeordnet, wobei die Kanaltiefen der beiden Kanäle derart bemessen sind, dass die Summe der beiden Kanaltiefen grösser ist als die Dicke der Bipolarplatte. Die beiden Kanäle an der Anodenseite und der Kathodenseite können weiter in Bezug auf die Plattenoberflächen geneigte, mit zunehmender Kanaltiefe auseinanderlaufende Kanalseitenwände aufweisen und derart zueinander versetzt angeordnet sein, dass sich die beiden Kanäle in Richtung senkrecht zur Plattenebene teilweise überlappen, d.h., dass auf eine Gerade senkrecht zur Plattenebene die beiden Kanäle teilweise durchdringt.

Bei einer Bipolarplatte mit Fluidleitungskanälen sowohl in der Plattenoberfläche an der Anodenseite als auch in der Plattenoberfläche an der Kathodenseite ist, insbesondere bei einer Verwendung der Bipolarplatte für einen Elektrolyseur, die Summe der Kanalquerschnittflächen der in der Plattenoberfläche an der Anodenseite ausgebildeten Fluidleitungskanäle vorzugsweise grösser als die Summe der Kanalquerschnittflächen der in der Plattenoberfläche an der Kathodenseite ausgebildeten Fluidleitungskanäle, denn für einen mit Wasser betriebenen Elektrolyseur müssen die anodenseitigen Kanäle sowohl das bei der Elektrolyse produzierte Sauerstoffgas als auch das nicht verbrauchte Wasser abführen, während die kathodenseitigen Kanäle bloss das bei der Elektrolyse produzierte Wasserstoffgas abführen müssen.

Bei einer weiteren Variante der Erfindung sind die Fluidleitungskanäle auf der Kathodenseite und der Anodenseite der Bipolarplatte derart ausgebildet und angeordnet, dass die Bipolarplatte - in einem Querschnitt senkrecht zur Plattenebene betrachtet - wenigstens einen Abschnitt aufweist, in welchem die Platte die Form eines mäandrirenden Bandes aufweist. Die Kanäle können derart angeordnet und ausgebildet sein, dass die Bipolarplatte im Querschnitt die Form eines mäandrierenden Bandes mit im wesentlichen konstanter Bandbreite aufweist. In diesem Zusammenhang wird unter konstanter Bandbreite verstanden, dass die Breite des Bandes um nicht mehr als ungefähr +/- 20% variiert.

Ein Elektrolyseur gemäss der Erfindung weist eine Bipolarplatte auf, die eine Anodenseite, eine Kathodenseite und in wenigstens einer der beiden Plattenoberflächen an der Anodenseite und der Kathodenseite ausgebildete Fluidleitungskanäle umfasst. Die Bipolarplatte zeichnet sich dadurch aus, dass die Kanäle wenigstens einen Abschnitt aufweisen, in welchem die Kanäle in einem Bereich im Innern der Bipolarplatte eine grössere Breite aufweisen als die Kanalbreite beim Kanalrand an der Oberfläche der Bipolarplatte.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnung

Die Zeichnungen stellen eine Bipolarplatte gemäss einer bevorzugten Ausführungsform der vorliegenden Erfindung dar. Es zeigen:
- Fig. 1: Draufsicht auf die Anodenseite einer Bipolarplatte gemäss einer bevorzugten Ausführungsart der vorliegenden Erfindung;
- Fig. 2: Draufsicht auf die Kathodenseite der Bipolarplatte aus Fig. 1;
- Fig. 3: Querschnitt entlang der Linie A-A in den Figuren 1 und 2 in einer vergrösserten Ansicht;
- Fig. 4: Querschnitt entlang der Linie B-B in der Figur 1 in einer vergrösserten Teilansicht;
- Fig. 5: Querschnitt entlang der Linie C-C in der Figur 2 in einer vergrösserten Teilansicht;
- Fig. 6: teilweise geschnittene Ansicht auf einen Zellenstapel eines Elektrolyseurs gemäss einer bevorzugten Ausführungsart der vorliegenden Erfindung in einer vereinfachten schematischen Darstellung.

Grundsätzlich sind in den Figuren gleiche Teile mit gleichen Bezugszeichen versehen.

### Wege zur Ausführung der Erfindung

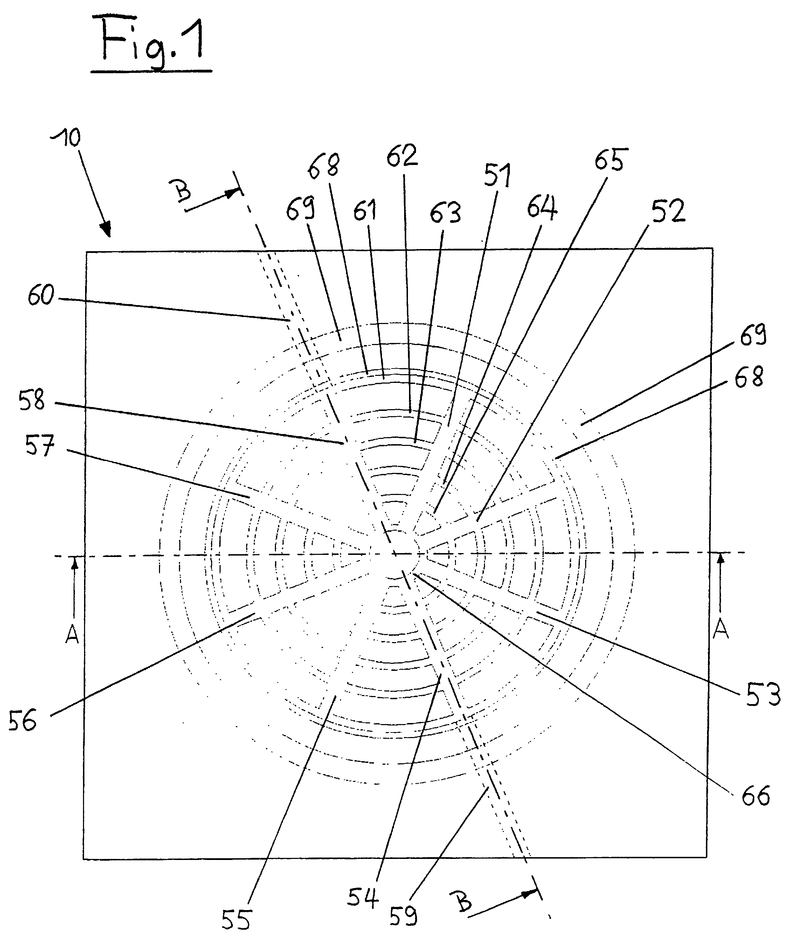

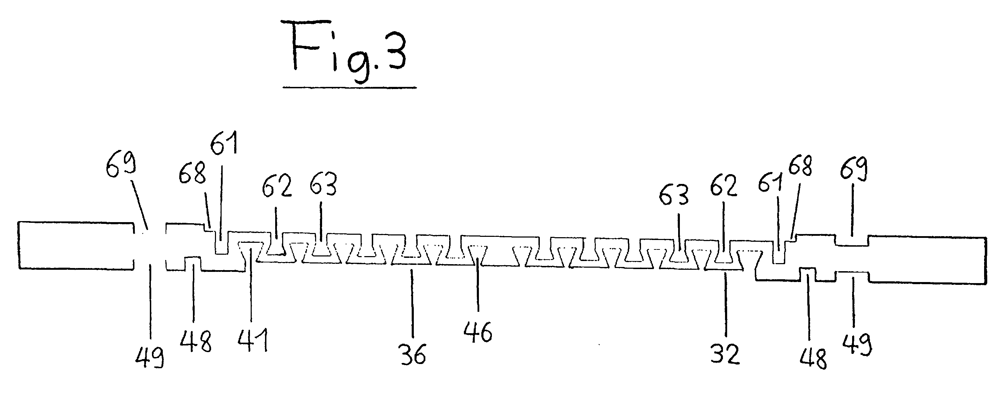

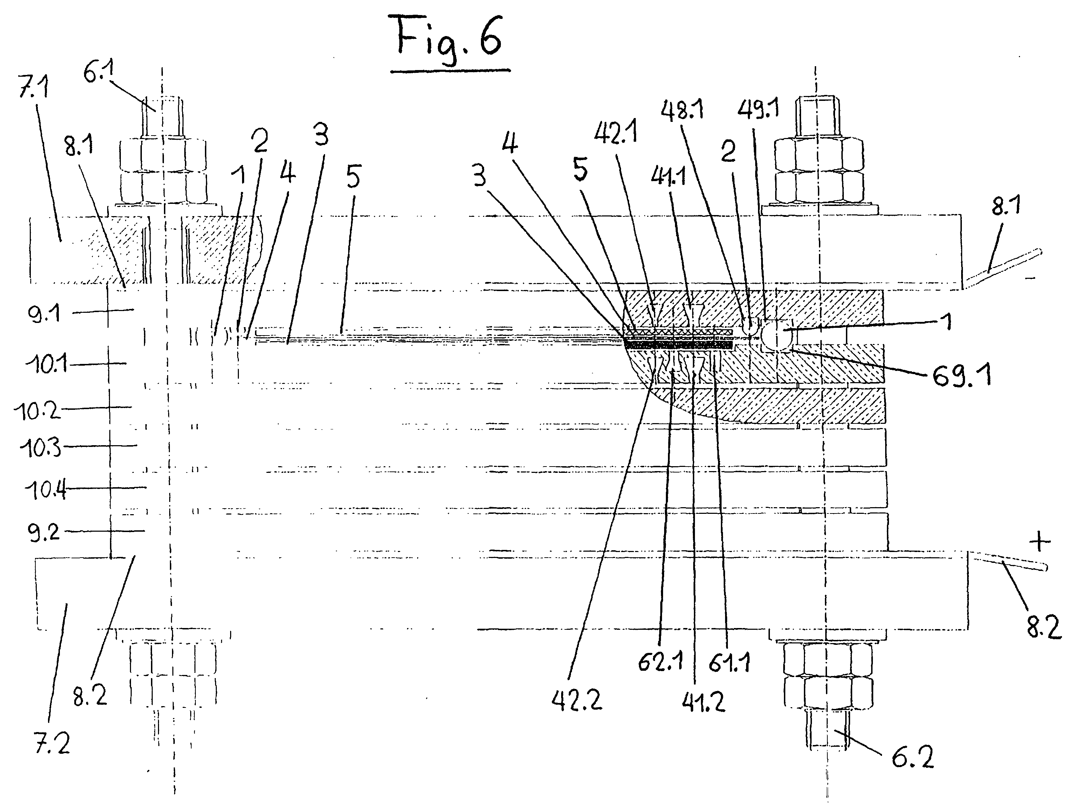

In den Figuren 1 bis 5 ist eine beispielhafte Bipolarplatte 10 gemäss einer bevorzugten Ausführungsart der vorliegenden Erfindung in verschiedenen Ansichten dargestellt, und die Figur 6 zeigt in vereinfachter Darstellung einen Zellenstapel eines Elektrolyseurs gemäss einer bevorzugten Ausführungsart der Erfindung.

Sämtliche der in den Figuren dargestellten erfindungsgemässen End- und Bipolarplatten sind aus einem korrosionsbeständigen Elektrographit gefertigt, wie er beispielsweise von der deutschen Firma Sigri GmbH, D-86405 Meitingen unter der Handelsbezeichnung "Diabon F 110" vertrieben wird. Grundsätzlich können jedoch auch andere für die Fertigung von elektrisch leitfähigen End- und Bipolarplatten geeignete Materialien verwendet werden, wie z.B. Titan.

Die in den Figuren 1 bis 5 dargestellte Bipolarplatte 10 hat im wesentlichen die Form einer quadratischen Platte mit einer Seitenlänge von ungefähr 150 mm und einer Dicke von ungefähr 7 mm. Die eine Flachseite der Bipolarplatte 10 definiert nach der Anordnung in einem Zellenstapel eines Elektrolyseurs die anodenseitige Begrenzung einer Membran-Elektroden-Einheit bzw. einer elektrochemischen Zelle und wird demzufolge als Anodenseite der Bipolarplatte 10 bezeichnet. Die andere Flachseite der Bipolarplatte 10 definiert nach der Anordnung im Zellenstapel die kathodenseitige Begrenzung einer benachbarten Zelle und wird demzufolge als Kathodenseite der Bipolarplatte 10 bezeichnet.

In der Oberfläche der Anodenseite der Bipolarplatte 10, welche in der Figur 1 in einer Draufsicht dargestellt ist, ist in der Anodenseite der Bipolarplatte 10 eine flächige, kreisscheibenförmigen Vertiefung 68 ausgebildet, die ungefähr 1 mm tief ist. Der Radius dieser Vertiefung misst ungefähr 46.5 mm. Die Vertiefung 68 dient der Aufnahme eines porösen Katalysators bei der in einem Zellenstapel eines Elektrolyseurs angeordneten Bipolarplatte 10.

Innerhalb der kreisscheibenförmigen Vertiefung 68 sind sechs Ringkanäle 61, 62, 63, 64, 65, 66 in Form von konzentrischen Kreisen in der Oberfläche der Anodenseite der Bipolarplatte 10 ausgebildet, wobei die Ringkanäle 61 - 66 konzentrisch zur kreisscheibenförmigen Vertiefung 68 angeordnet sind. Die konzentrischen Kreise der Ringkanäle 61 - 66 weisen mittlere Radien von ungefähr 43.5, 35, 28, 21, 14 und 7 mm auf. Die Ringkanäle 61 - 66 sind durch acht vom äussersten Ringkanal 61 bis zum innersten Ringkanal 66 radial verlaufende Sammelkanäle 51, 52, 53, 54, 55, 56, 57, 58 fluidleitend miteinander verbunden. Die Ringkanäle 61 - 66 sowie die Radialkanäle 51 - 58 in der Anodenseite der Bipolarplatte 10 dienen der Zuführung von Wasser und der Abführung des bei der Elektrolyse erzeugten Sauerstoffgases sowie des nicht verbrauchten Wassers.

Für die Wasserzuführung ist die Bipolarplatte 10 mit einer vom äussersten Ringkanal 61 zu einer Stimseite der Bipolarplatte 10 führenden fluidleitenden Bohrung 59 versehen. Eine weitere Bohrung 60, welche im wesentlichen auf der der ersten Bohrung 59 gegenüberliegenden Seite der Bipolarplatte 10 angeordnet ist und welche wiederum im äussersten Ringkanal 61 sowie in der gegenüberliegenden Stirnseite der Bipolarplatte 10 mündet, dient der Abführung des bei der Elektrolyse erzeugten Sauerstoffgases sowie des nicht verbrauchten Wassers. Die (eigentlich unsichtbaren) Bohrungen 59 und 60 sind in der Draufsicht der Figur 1 mit unterbrochenen Linien dargestellt.

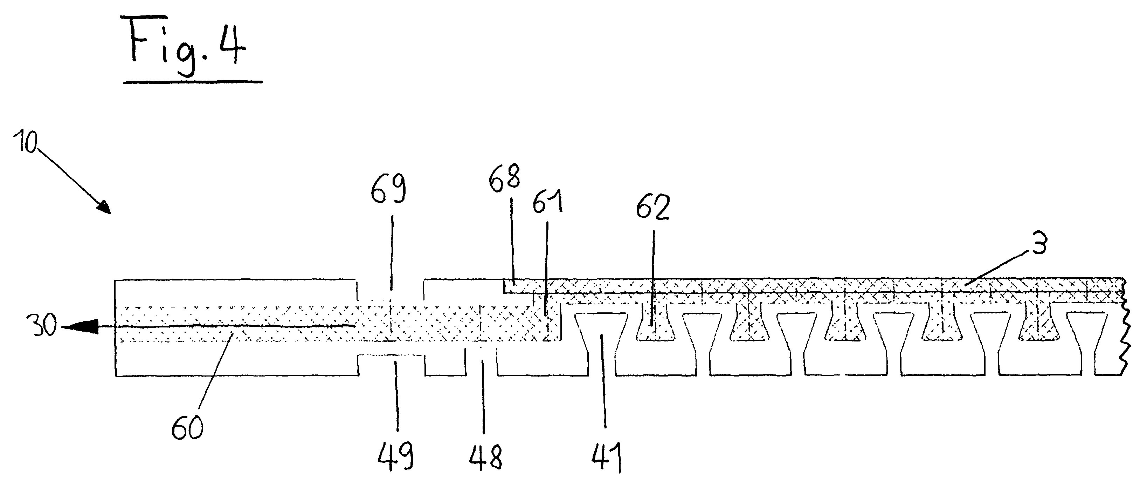

Die Fluidströmung des Wassers und des Sauerstoffgases ist am besten in der Darstellung der Figur 4 erkennbar, wo der durch das Wasser und den Sauerstoff eingenommene Bereich schraffiert dargestellt ist und die Strömungsrichtung mit dem Pfeil 30 markiert ist. In der Figur 4 ist weiter die in der Vertiefung 68 aufgenommene poröse Katalysatorplatte 3 dargestellt, welche vollständig von Wasser und Sauerstoffgas durchströmt wird.

Die Radialkanäle 51 - 58 innerhalb der Vertiefung 68 auf der Anodenseite der Bipolarplatte 10 weisen einen im wesentlichen rechteckigen Kanalquerschnitt mit einer Tiefe von ungefähr 2 mm und einer Breite von ungefähr 3.6 mm auf.

Der radial äusserste (innerhalb der Vertiefung 68 in der Anodenseite der Bipolarplatte 10 ausgebildete) Ringkanal 61 hat einen rechteckigen Kanalquerschnitt mit einer Tiefe von ca. 3.5 mm und einer Breite von ca. 2 mm. Die (ebenfalls innerhalb der Vertiefung 68 in der Anodenseite der Bipolarplatte 10 ausgebildeten) inneren Ringkanäle 62 - 66 weisen an der Kanalaussenseite (bei der anodenseitigen Plattenoberfläche) einen Abschnitt mit einem rechteckigen Kanalquerschnitt auf. Dieser ungefähr 1.5 mm tiefe Kanalabschnitt hat eine Breite von ca. 1.8 mm. Innerhalb dieses Abschnittes nimmt die Kanalbreite in einem zweiten, ungefähr 2 mm tiefen Abschnitt nach innen, d.h. mit zunehmender Kanaltiefe, zu, wobei der Kanalquerschnitt in diesem zweiten Abschnitt trapezförmig ausgebildet ist. Die Kanalsohle (d.h. die lange Parallelseite des Trapezes) ist ungefähr 3.5 mm breit. Die kurze Parallelseite des Trapezes (welche der Kanalbreite an der Grenze vom ersten zum zweiten Abschnitt entspricht) misst ca. 1.8 mm.

In der Oberfläche der Anodenseite der Bipolarplatte 10 ist weiter ein ringförmiger Einstich 69 ausgebildet, welcher der Aufnahme der weiter hinten beschriebenen ringförmigen O-Ring-Dichtung zum Abdichten der durch die Anodenseite der Bipolarplatte 10 begrenzten Zelle dient. Der Einstich 69 weist einen im wesentlichen rechteckigen Querschnitt mit einer Tiefe von ungefähr 1.5 mm und einer Breite von ungefähr 5 mm auf.

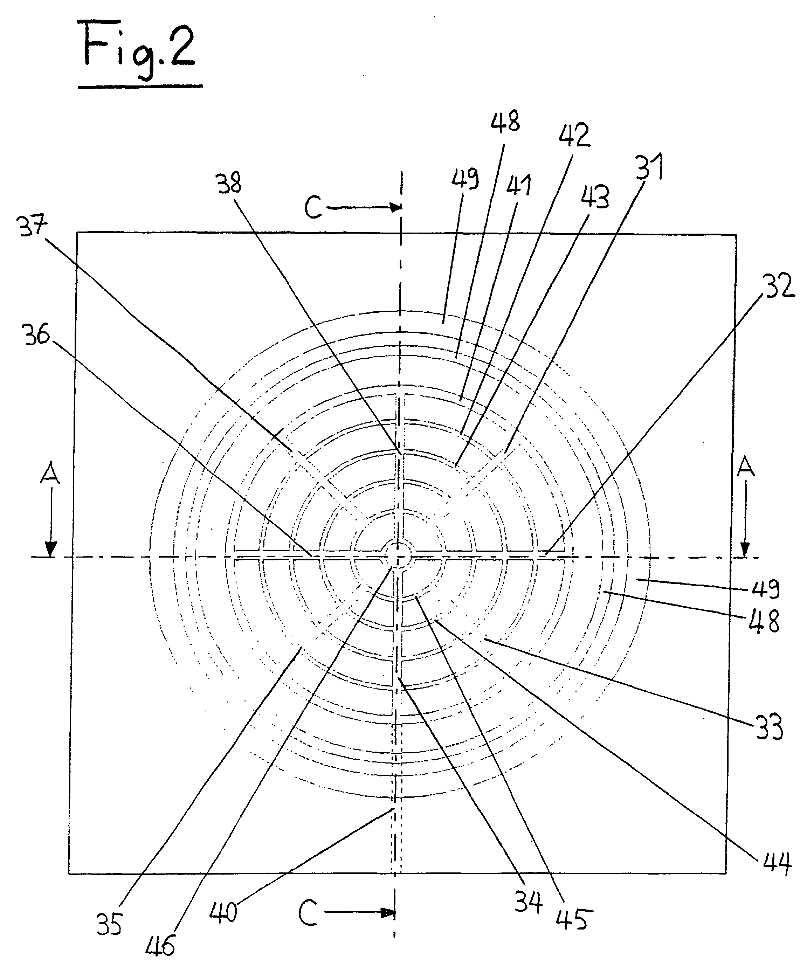

In der Oberfläche der Kathodenseite der Bipolarplatte 10, welche in der Figur 2 in einer Draufsicht dargestellt ist, sind in der Kathodenseite der Bipolarplatte 10 sechs Ringkanäle 41, 42, 43, 44, 45, 46 in Form von konzentrischen Kreisen ausgebildet. Die konzentrischen Kreise der Ringkanäle 41 - 46 weisen mittlere Radien von ungefähr 39, 31.5, 24.5, 17.5, 10.5 und 3.5 mm auf. Die Ringkanäle 41 - 46 sind durch acht vom äussersten Ringkanal 41 bis zum innersten Ringkanal 46 radial verlaufende Sammelkanäle 31, 32, 33, 34, 35, 36, 37, 38 fluidleitend miteinander verbunden. Die Ringkanäle 41 - 46 sowie die Radialkanäle 31 - 38 in der Kathodenseite der Bipolarplatte 10 dienen der Abführung des bei der Elektrolyse erzeugten Wasserstoffgases.

Für die Abführung des Wasserstoffgases aus der Bipolarplatte 10 heraus ist die Bipolarplatte 10 mit einer vom äussersten Ringkanal 41 zu einer Stirnseite der Bipolarplatte 10 führenden fluidleitenden Bohrung 40 versehen. Die (eigentlich unsichtbare) Bohrung 40 ist in der Draufsicht der Figur 2 mit unterbrochenen Linien dargestellt.

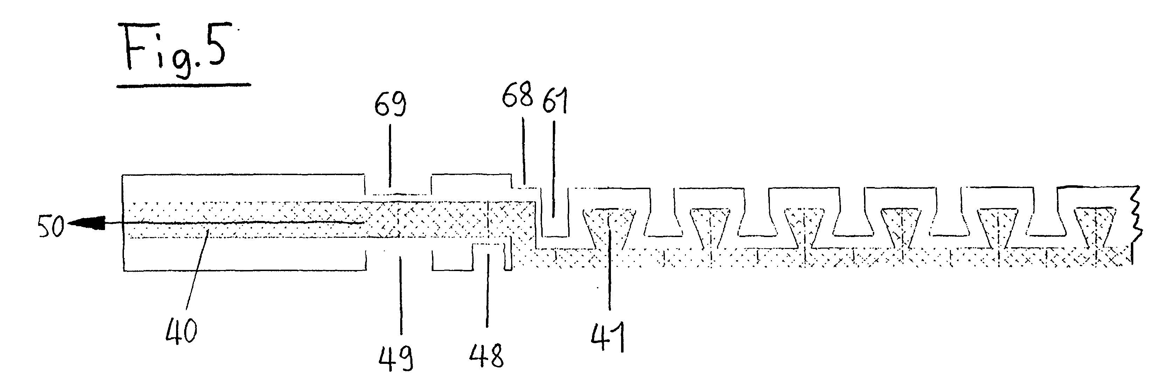

Die Fluidströmung des Wasserstoffgases ist am besten in der Darstellung der Figur 5 erkennbar, wo der durch das Wasserstoffgas eingenommene Bereich schraffiert dargestellt ist und die Strömungsrichtung mit dem Pfeil 50 markiert ist.

Die Radialkanäle 31 - 38 auf der Kathodenseite der Bipolarplatte 10 weisen einen im wesentlichen rechteckigen Kanalquerschnitt mit einer Tiefe von ungefähr 2 mm und einer Breite von ungefähr 2 mm auf.

Der radial äusserste (in der Kathodenseite der Bipolarplatte 10 ausgebildete) Ringkanal 41 hat an der Kanalaussenseite (bei der kathodenseitigen Plattenoberfläche) einen Abschnitt mit einem rechteckigen Kanalquerschnitt und einer Tiefe von ungefähr 1.5 mm sowie einer Breite von ungefähr 2 mm. Innerhalb dieses Abschnittes nimmt die Kanalbreite in einem zweiten, ungefähr 2.5 mm tiefen Abschnitt nach innen, d.h. mit zunehmender Kanaltiefe, zu, wobei der Kanalquerschnitt in diesem zweiten Abschnitt trapezförmig ausgebildet ist. Die Kanalsohle (d.h. die lange Parallelseite des Trapezes) ist ungefähr 4.5 mm breit. Die kurze Parallelseite des Trapezes (welche der Kanalbreite an der Grenze vom ersten zum zweiten Abschnitt entspricht) misst ca. 2 mm.

Die (ebenfalls in der Kathodenseite der Bipolarplatte 10 ausgebildeten) inneren Ringkanäle 42 - 46 weisen an der Kanalaussenseite (bei der kathodenseitigen Plattenoberfläche) einen Abschnitt mit einem rechteckigen Kanalquerschnitt auf. Dieser ungefähr 1.5 mm tiefe Kanalabschnitt hat eine Breite von ca. 1 mm. Innerhalb dieses Abschnittes nimmt die Kanalbreite in einem zweiten, ungefähr 2.5 mm tiefen Abschnitt nach innen, d.h. mit zunehmender Kanaltiefe, zu, wobei der Kanalquerschnitt in diesem zweiten Abschnitt trapezförmig ausgebildet ist. Die Kanalsohle (d.h. die lange Parallelseite des Trapezes) ist ungefähr 3.5 mm breit. Die kurze Parallelseite des Trapezes (welche der Kanalbreite an der Grenze vom ersten zum zweiten Abschnitt entspricht) misst ca. 1 mm.

In der Oberfläche der Kathodenseite der Bipolarplatte 10 sind weiter zwei ringförmige Einstiche 48, 49 ausgebildet, welche die Kanäle 31 - 38 und 41 - 46 umfassen. Der radial innere Einstich 48 dient der Aufnahme der weiter hinten beschriebenen ringförmigen O-Ring-Dichtung zum Abdichten der Wasserstoffseite der Zelle. Er weist einen im wesentlichen rechteckigen Querschnitt mit einer Tiefe von ungefähr 2 mm und einer Breite von ungefähr 2.5 mm auf. Der Einstich 49 dient der Aufnahme der weiter hinten beschriebenen ringförmigen O-Ring-Dichtung zum Abdichten der durch die Kathodenseite der Bipolarplatte 10 begrenzten Zelle. Er weist einen im wesentlichen rechteckigen Querschnitt mit einer Tiefe von ungefähr 1.5 mm und einer Breite von ungefähr 5 mm auf.

Insgesamt sind die Kanalbreiten in der Oberfläche der Anodenseite der Bipolarplatte 10 breiter als die Kanalbreiten in der Oberfläche der Kathodenseite der Bipolarplatte 10.

Der in der Figur 6 dargestellte Zellenstapel umfasst vier Bipolarplatten 10.1, 10.2, 10.3, 10.4 des in den Figuren 1 bis 5 dargestellten Typs. Die vier Bipolarplatten 10.1, 10.2, 10.3, 10.4 sind zwischen einer kathodenseitigen Endplatte 9.1 und einer anodenseitigen Endplatte 9.2 angeordnet, in deren stapelseitigen Oberflächen Zu- und Abführkanäle für das Wasser und die bei der Elektrolyse erzeugten Gase Wasserstoff und Sauerstoff ausgebildet sind. Durch diese Anordnung werden fünf Membran-Elektroden-Einheiten bzw. elektrochemische Zellen gebildet, nämlich drei zwischen jeweils zwei Bipolarplatten angeordnete Zellen und zwei zwischen jeweils einer Bipolarplatte und einer Endplatte angeordnete Zellen. Der negative Pol 8.1 und der positive Pol 8.2 des Zellenstapels sind - je in Form einer Platte aus elektrisch leitfähigem Material wie beispielsweise Kupfer - an den bezüglich des Stapels äusseren Seiten der Endplatten 9.1 bzw. 9.2 angeordnet und mit letzteren in elektrisch leitendem Kontakt. Der Stapel wird durch zwei solide Deckplatten 7.1, 7.2 abgeschlossen, welche die zu den Bipolarplatten 10.1 - 10.4 parallelen Aussenwände des Stapels bilden. Senkrecht zu den Bipolarplatten 10.1 - 10.4 sind über den ganzen Stapel reichende Schraubenbolzen 6.1, 6.2 durch Bohrungen in den Deckplatten 7.1, 7.2 hindurch geführt, um mittels Schraubenmuttern eine feste Verklemmung des Zellenstapels zwischen den beiden Deckplatten 7.1, 7.2 zu ermöglichen.

Die Membran-Elektroden-Einheit bzw. die elektrochemische Zelle zwischen der kathodenseitigen Endplatte 9.1 und der stapelseitig daran anschliessenden Bipolarplatte 10.1 ist in der Darstellung der Figur 6 detaillierter dargestellt als die übrigen Zellen, wobei im schraffierten Ausschnitt die Elemente der Zelle in einer detaillierten Querschnittansicht dargestellt sind.

Zwischen der stapelseitigen Plattenoberfläche der kathodenseitigen Endplatte 9.1 und der anschliessenden Festelektrolyt-Membran 4 ist eine poröse Stromverteilermatte 5 angeordnet, um einen guten elektrischen Kontakt zwischen der Endplatte 9.1 und der Festelektrolyt-Membran 4 zu gewährleisten. Diese Stromverteiler- oder Kontaktmatte 5 kann als Anode der Zelle zwischen der Endplatte 9.1 und der anschliessenden Bipolarplatte 10.1 betrachtet werden. Anodenseitig an die Festelektrolyt-Membran 4 anliegend folgt eine Katalysatorplatte 3, welche in einer kreisscheibenförmigen Vertiefung (analog der weiter oben beschriebenen kreisscheibenförmigen Vertiefung 68) auf der Anodenseite der anschliessenden Bipolarplatte 10.1 angeordnet ist. Bei anderen, nicht in den Figuren dargestellten Ausführungsarten von erfindungsgemässen Elektrolyseuren können zwischen der Katalysatorplatte 3 und der Festelektrolyt-Membran 4 einerseits sowie der Katalysatorplatte 3 und der Bipolarplatte 10.1 andrerseits weitere Stromverteiler- oder Kontaktmatte angeordnet sein, wobei eine zwischen der Katalysatorplatte 3 und der Bipolarplatte 10.1 angeordnete Stromverteilermatte als Anode der Zelle zwischen der Endplatte 9.1 und der Bipolarplatte 10.1 betrachtet werden kann.

Zur randseitigen Abdichtung der Zelle zwischen der kathodenseitigen Endplatte 9.1 und der anschliessenden Bipolarplatte 10.1 sind zwei ringförmige O-Ring-Dichtungen zwischen der Endplatte 9.1 und der anschliessenden Bipolarplatte 10.1 angeordnet. Die radial äussere O-Ring-Dichtung 1 umfasst die Festelektrolyt-Membran 4 sowie die mit den Kanälen versehenen Plattenbereiche an den zellenseitigen Oberflächen der Endplatte 9.1 und der Bipolarplatte 10.1, wo die Elektrolyse stattfindet, vollständig und dichtet somit die gesamte Zelle nach aussen ab. Die radial äussere O-Ring-Dichtung 1 ist kathodenseitig in einem ringförmigen Einstich 49.1 in der Oberfläche der Endplatte 9.1 und anodenseitig in einem entsprechenden Einstich 69.1 in der Anodenseite der Bipolarplatte 10.1 angeordnet. Radial innerhalb der äusseren O-Ring-Dichtung 1 ist eine weitere ringförmige O-Ring-Dichtung 2 zwischen der Festelektrolyt-Membran 4 und der Endplatte 9.1 angeordnet, um die Wasserstoffseite (d.h. die Kathodenseite) der Zelle abzudichten. Die radial innere O-Ring-Dichtung 2 ist kathodenseitig in einem ringförmigen Einstich 48.1 in der Oberfläche der Endplatte 9.1 angeordnet, während anodenseitig kein entsprechender Einstich in der Oberfläche der Bipolarplatte 10.1 vorgesehen ist, damit die Bipolarplatte 10.1 im Bereich des Einstichs 48.1 anodenseitig auf die Festelektrolyt-Membran 4 drückt und dadurch die radial innere O-Ring-Dichtung 2 in den Einstich 48.1 hinein gepresst wird, um eine hermetische Abdichtung der Wasserstoffseite der Zelle zu erreichen.

Als Festelektrolyt-Membran 4 für die in den Figuren dargestellten Ausführungsarten der Erfindung wird eine semipermeable Membran auf der Basis von Poly(perfluoralkylen)sulfonsäure verwendet, wie sie von der Firma Du Pont unter der Handelsbezeichnung "Nafion 117" vertrieben wird.

Der Katalysator 3 besteht aus einer porösen Platte, die mit einer Beschichtung auf der Basis von Iridium-Dioxid versehen ist. Solche Katalysatoren werden u.a. in der weiter oben erwähnten Publikation von M. Yamaguchi, K. Yagiuchi und K. Okisawa beschrieben. Es können jedoch auch andere für Elektrolyseure und Brennstoffzellen übliche Katalysatoren verwendet werden, so z.B. Platin-Katalysatoren.

Die Stromverteiler- oder Kontaktmatte 5 besteht aus einem porösen, für Elektrolyseure und Brennstoffzellen üblichen Elektrodenmaterial auf der Basis von Graphit und Kunststoffen wie beispielsweise Polytetrafluorethylen; solche Kontaktmatten sind u.a. aus der Patentschrift US 4 590 135 (Occidental Chemical Corporation) bekannt.

Beim Betrieb des Elektrolyseurs mit dem in Figur 6 dargestellten Zellenstapel wird eine elektrische Spannung an die Pole 8.1, 8.2 des Zellenstapels angelegt und durch Zuführleitungen (nicht dargestellt) hindurch Wasser in die Kanälen 61.1, 61.2 der anodenseiten der Bipolarplatten 10.1 - 10.4 und der anodenseitigen Endplatte 9.2 eingespeist. Das Wasser wird elektrolytisch zersetzt, wobei an den Anoden der fünf Membran-Elektroden-Einheiten bzw. elektrochemischen Zellen Sauerstoffgas und an den Kathoden dieser Zellen Wasserstoffgas entsteht. Das Sauerstoffgas wird zusammen mit dem nicht verbrauchten Wasser durch die Kanäle 61.1, 61.2 in den Anodenseiten der Bipolarplatten 10.1 - 10.4 sowie der anodenseitigen Endplatte 9.2 hindurch in entsprechende Sauerstoff-Sammelleitungen (nicht dargestellt) geleitet und durch diese hindurch aus dem Zellenstapel des Elektrolyseurs hinaus abgeführt, während das Wasserstoffgas durch die Kanäle 41.1, 42.1; 41.2, 42.2 in den Kathodenseiten der Bipolarplatten 10.1- 10.4 sowie der kathodenseitigen Endplatte 9.2 hindurch in entsprechende Wasserstoff-Sammelleitungen (nicht dargestellt) geleitet und aus dem Zellenstapel des Elektrolyseurs hinaus abgeführt wird.

Der in der Figur 6 dargestellte ist für eine elektrische Leistung von ungefähr 1 kW ausgelegt.

Zusammenfassend ist festzustellen, dass durch die Erfindung ein Elektrolyseur mit Bipolarplatten sowie eine Bipolarplatte geschaffen werden, die Fluidleitungskanäle mit ausreichend grossen Kanalquerschnitten aufweist, ohne dass der elektrische Widerstand für einen Stromfluss senkrecht zu den Plattenoberflächen durch einen aus solchen Bipolarplatten und Membran-Elektroden-Einheiten gebildeten Stapel hindurch aufgrund der Kanäle wesentlich vergrössert wird.

## Patentansprüche

1. Bipolarplatte (10) zur Verwendung in einem Elektrolyseur oder in einer Brennstoffzelle, mit einer Anodenseite und einer Kathodenseite und mit in wenigstens einer der beiden Plattenoberflächen an der Anodenseite und der Kathodenseite ausgebildeten Fluidleitungskanälen (62), **dadurch gekennzeichnet, dass** die Kanäle (62) wenigstens einen Abschnitt aufweisen, in welchem die Kanäle (62) in einem Bereich im Innern der Bipolarplatte (10) eine grössere Breite aufweisen als die Kanalbreite beim Kanalrand an der Oberfläche der Bipolarplatte (10).

2. Bipolarplatte (10) nach Anspruch 1, **dadurch gekennzeichnet, dass** die Kanäle (62) in einem Bereich im Innern der Bipolarplatte (10) wenigstens die anderthalbfache Breite der Kanalbreite beim Kanalrand an der Oberfläche der Bipolarplatte (10) aufweisen.

3. Bipolarplatte (10) nach Anspruch 1 oder 2, **dadurch gekennzeichnet, dass** die Kanäle (62) in einem Bereich im Innern der Bipolarplatte (10) wenigstens die zweifache Breite der Kanalbreite beim Kanalrand an der Oberfläche der Bipolarplatte (10) aufweisen.

4. Bipolarplatte (10) einem der Ansprüche 1 bis 3, **gekennzeichnet durch** eine Ausbildung der Kanäle (62) derart, dass sie wenigstens in einem Abschnitt einen im wesentlichen trapezförmigen Kanalquerschnitt aufweisen, wobei die kurze parallele Trapezseite **durch** die Kanalöffnung am Abschnittsrand bei der Oberfläche der Bipolarplatte (10), die lange parallele Trapezseite **durch** die Kanalsohle im Innern der Bipolarplatte (10) und die beiden nicht parallelen Trapezseiten **durch** die Kanalseitenwände definiert werden.

5. Bipolarplatte (10) nach einem der Ansprüche 1 bis 4, **dadurch gekennzeichnet, dass** in der die Kanäle aufweisenden Plattenoberfläche wenigstens zwei ringförmige Fluidleitungskanäle (62, 63) ausgebildet und nach Art von konzentrischen Kreisen angeordnet sind, die durch wenigstens einen radial verlaufenden Sammelkanal (51) fluidleitend verbunden sind.

6. Bipolarplatte (10) nach einem der Ansprüche 1 bis 5, **dadurch gekennzeichnet, dass** die Platte (10) eine im wesentlichen ebene Form aufweist und Fluidleitungskanäle (62, 42) in beiden zur Plattenebene im wesentlichen parallelen Plattenoberflächen an der Anodenseite und der Kathodenseite ausgebildet sind, wobei wenigstens ein Kanal (62) an der Anodenseite gegenüber einem weiteren Kanal (42) an der Kathodenseite versetzt angeordnet ist und die Kanaltiefen der beiden Kanäle (62, 42) derart bemessen sind, dass die Summe der beiden Kanaltiefen grösser ist als die Dicke der Bipolarplatte (10).

7. Bipolarplatte (10) nach Anspruch 6, **dadurch gekennzeichnet, dass** die beiden Kanäle an der Anodenseite und der Kathodenseite in Bezug auf die Plattenoberflächen geneigte, mit zunehmender Kanaltiefe auseinanderlaufende Kanalseitenwände aufweisen und derart versetzt zueinander angeordnet sind, dass sich die beiden Kanäle in einer Richtung senkrecht zur Plattenebene teilweise überlappen.

8. Bipolarplatte (10) nach Anspruch 6 oder 7, **dadurch gekennzeichnet, dass** die Summe der Kanalquerschnittflächen der in der Plattenoberfläche an der Anodenseite ausgebildeten Fluidleitungskanäle grösser ist die Summe der Kanalquerschnittflächen der in der Plattenoberfläche an der Kathodenseite ausgebildeten Fluidleitungskanäle.

9. Bipolarplatte (10) nach einem der Ansprüche 6 bis 8, **gekennzeichnet durch** eine Ausbildung und Anordnung der Fluidleitungskanäle (41, 42, 43, 44, 45, 46; 61, 62, 63, 64, 65, 66) derart, dass die Bipolarplatte (10) in einem Querschnitt senkrecht zur Plattenebene wenigstens einen Abschnitt aufweist, in welchem die Platte die Form eines mäandrirenden Bandes mit im wesentlichen konstanter Bandbreite aufweist.

10. Elektrolyseur mit wenigstens einer Bipolarplatte (10) nach einem der Ansprüche 1 bis 9, die eine Anodenseite, eine Kathodenseite und in wenigstens einer der beiden Plattenoberflächen an der Anodenseite und der Kathodenseite ausgebildeten Fluidleitungskanäle (62) umfasst, **dadurch gekennzeichnet, dass** die Kanäle (62) wenigstens einen Abschnitt aufweist, in welchem die Kanäle (62) in einem Bereich im Innern der Bipolarplatte (10) eine grössere Breite aufweisen als die Kanalbreite beim Kanalrand an der Oberfläche der Bipolarplatte (10).

## Claims

1. Bipolar plate (10) for use in an electrolyzer or in a fuel cell, having an anode side and a cathode side and having fluid guide channels (62) formed in at least one of the two plate surfaces on the anode side and the cathode side, **characterised in that** the channels (62) have at least one portion in which the width of the channels (62) in a region inside the bipolar plate (10) is larger than the channel width at the channel edge at the surface of the bipolar plate (10).

2. Bipolar plate (10) according to claim 1, **characterised in that** the width of the channels (62) in a region inside the bipolar plate (10) is at least one and a half times the channel width at the channel edge at the surface of the bipolar plate (10).

3. Bipolar plate (10) according to claim 1 or 2, **characterised in that** the width of the channels (62) in a region inside the bipolar plate (10) is at least twice the channel width at the channel edge at the surface of the bipolar plate (10).

4. Bipolar plate (10) according to any one of claims 1 to 3, **characterised in that** the channels (62) are so formed that they have a substantially trapeziform channel cross-section in at least one portion, the short parallel side of the trapezium being defined by the channel opening at the portion edge at the surface of the bipolar plate (10), the long parallel side of the trapezium being defined by the channel base inside the bipolar plate (10), and the two non-parallel sides of the trapezium being defined by the side walls of the channel.

5. Bipolar plate (10) according to any one of claims 1 to 4, **characterised in that** at least two annular fluid guide channels (62, 63) are formed and are arranged in the manner of concentric circles in the surface comprising the channels (62), which fluid guide channels (62, 63) are connected in a fluid-guiding manner by at least one radially extending collecting channel (51).

6. Bipolar plate (10) according to any one of claims 1 to 5, **characterised in that** the plate (10) has a substantially flat shape and fluid guide channels (62, 42) are formed on the anode side and the cathode side in both plate surfaces that are substantially parallel to the plane of the plate, at least one channel (62) on the anode side being arranged offset with respect to a further channel (42) on the cathode side and the depths of the two channels (62, 42) being such that the sum of the two channel depths is greater than the thickness of the bipolar plate (10).

7. Bipolar plate (10) according to claim 6, **characterised in that** the two channels on the anode side and the cathode side have channel side walls which slope relative to the plate surfaces and diverge as the channel depth increases and which are arranged offset with respect to one another in such a manner that the two channels partly overlap in a direction perpendicular to the plane of the plate.

8. Bipolar plate (10) according to claim 6 or 7, **characterised in that** the sum of the channel cross-sectional areas of the fluid guide channels formed in the surface of the plate on the anode side is greater than the sum of the channel cross-sectional areas of the fluid guide channels formed in the surface of the plate on the cathode side.

9. Bipolar plate (10) according to any one of claims 6 to 8, **characterised in that** the fluid guide channels (41, 42, 43, 44, 45, 46; 61, 62, 63, 64, 65, 66) are so formed and arranged that the bipolar plate (10) has in a cross-section perpendicular to the plane of the plate at least one portion in which the plate has the form of a meandering band having a substantially constant band width.

10. Electrolyzer having at least one bipolar plate (10) according to any one of claims 1 to 9, which comprises an anode side, a cathode side and fluid guide channels (62) formed in at least one of the two plate surfaces on the anode side and the cathode side, **characterised in that** the channels (62) have at least one portion in which the width of the channels (62) in a region inside the bipolar plate (10) is larger than the channel width at the channel edge at the surface of the bipolar plate (10).

## Revendications

1. Plaque bipolaire (10) destinée à l'utilisation dans un électrolyseur ou dans une pile à combustible, avec un côté anode et un côté cathode et avec des canaux conducteurs de fluide (62) formés dans au moins l'une des deux surfaces de la plaque sur le côté anode et sur le côté cathode, **caractérisée en ce que** les canaux (62) comportent au moins une section, dans laquelle les canaux (62), dans une zone à l'intérieur de la plaque bipolaire (10), présentant une plus grande largeur que la largeur de canal au bord du canal sur la surface supérieure de la plaque bipolaire (10).

2. Plaque bipolaire (10) selon la revendication 1, **caractérisée en ce que** les canaux (62) présentent dans une zone à l'intérieur de la plaque bipolaire (10) au moins une fois et demie la largeur de canal au bord de canal sur la surface supérieure de la plaque bipolaire (10).

3. Plaque bipolaire (10) selon la revendication 1 ou 2, **caractérisée en ce que** les canaux (62) présentant dans une zone a l'intérieur de la plaque bipolaire (10), au moins deux fois la largeur de canal au bord de canal sur la surface supérieure de la plaque bipolaire (10).

4. Plaque bipolaire (10) selon les revendications 1 à 3, **caractérisée par** une configuration des canaux (62) de telle sorte qu'au moins dans une section, ils présentant une section transversale de canal sensiblement trapézoïdale, le petit côté parallèle de trapèze étant défini par l'ouverture de canal sur le bord de section sur la surface supérieure de la plaque bipolaire (10), le grand côté parallèle de trapèze étant défini par le fond de canal à l'intérieur de la plaque bipolaire (10) et les deux côtés non parallèles de trapèze étant définis par les parois latérales de canal.

5. Plaque bipolaire (10) selon l'une des revendications 1 à 4, **caractérisée en ce que** dans la surface supérieure de la plaque comportant les canaux, il est formé au moins deux canaux conducteurs de fluide (62,63) annulaires et qui sont agencés à la manière de cercles concentriques qui sont raccordés en communication de fluide par au moins un canal collecteur (51) s'étendant radialement.

6. Plaque bipolaire (10) selon l'une des revendications 1 à 5, **caractérisée en ce que** la plaque (10) présente une forme sensiblement plate et **en ce que** des canaux conducteurs de fluide (62,42) sont formés dans les deux surfaces de la plaque sensiblement parallèles au plan de plaque, sur le côté anode et sur le côté cathode, tandis qu'au moins un canal (62) sur le côté anode est disposé de façon décalée par rapport à un autre canal (42) sur le côté cathode et les profondeurs des deux canaux (62,42) sont dimensionnés de telle sorte que la somme des deux profondeurs est supérieure à l'épaisseur de la plaque bipolaire (10).

7. Plaque bipolaire (10) selon la revendication 6, **caractérisée en ce que** les deux canaux sur le côté anode et sur le côté cathode présentent par rapport aux surfaces de la plaque des parois latérales de canal inclinées, s'écartent l'une de l'autre avec une profondeur croissante et sont agencés décalés entre eux de telle aorte que les deux canaux se chevauchent partiellement dans une direction perpendiculaire au plan de la plaque.

8. Plaque bipolaire (10) selon la revendication 6 ou 7, **caractérisée en ce que** la somme des aires de section transversale des canaux conducteurs de fluide configurés dans la surface de la plaque sur le côté anode est supérieure à la somme des aires de section transversale des canaux conducteurs de fluide configurés dans la surface de la plaque sur le côté cathode.

9. Plaque bipolaire (10) selon l'une des revendications 6 à 8, **caractérisée par** une configuration et un agencement des canaux conducteurs de fluide
(41, 42, 43, 44, 45, 46, 61, 62, 63, 64, 65, 66)
de telle sorte que la plaque bipolaire (10) dans une section transversale perpendiculaire au plan de la plaque comporte au moins une section dans laquelle la plaque présente la forme d'une bande sinueuse avec une largeur de bande sensiblement constante.

10. Electrolyseur avec au moins une plaque bipolaire (10) selon l'une des revendications 1 à 9, qui comprend un côté anode, un côté cathode et des canaux conducteurs de fluide (62) configurés dans au moins l'une des deux surfaces de la plaque sur le côté anode et sur le côté cathode, **caractérisé en ce que**, dans une zone à l'intérieur de la plaque bipolaire (10), les canaux (62) présentent une plus grande largeur que la largeur de canal sur le bord de canal sur la surface de la plaque bipolaire (10).
